(19) Europäisches Patentamt
European Patent Office
Office européen des brevets

(11) **EP 3 545 763 B1**

(12) **EUROPEAN PATENT SPECIFICATION**

(45) Date of publication and mention
of the grant of the patent:
**25.01.2023 Bulletin 2023/04**

(21) Application number: **18000312.1**

(22) Date of filing: **29.03.2018**

(51) International Patent Classification (IPC):
*A01N 25/12* (2006.01)    *A61K 47/44* (2017.01)
*A23P 10/43* (2016.01)    *A23L 33/105* (2016.01)
*A61K 9/14* (2006.01)    *A61K 9/16* (2006.01)

(52) Cooperative Patent Classification (CPC):
(C-Sets available)
**A01N 25/12; A23K 10/30; A23K 20/10;
A23K 20/105; A23K 20/111; A23K 20/158;
A23K 40/30; A23L 27/12; A23L 27/70; A23L 29/04;
A23L 33/105; A23L 33/115; A23P 10/43;**
A23V 2002/00                                (Cont.)

(54) **PARTICLE CONTAINING AT LEAST ONE VOLATILE SUBSTANCE, PROCESS FOR ITS PREPARATION, A FOOD OR FEED ADDITIVE CONTAINING THE SAME AND USE**

PARTIKEL MIT MINDESTENS EINER FLÜCHTIGEN SUBSTANZ, VERFAHREN ZU IHRER HERSTELLUNG, LEBENSMITTEL ODER FUTTERMITTELZUSATZ DAMIT UND VERWENDUNG

PARTICULE CONTENANT AU MOINS UNE SUBSTANCE VOLATILE, PROCÉDÉ DE PRÉPARATION ASSOCIÉ, ALIMENT OU ADDITIF ALIMENTAIRE LES CONTENANT ET UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2019 Bulletin 2019/40**

(73) Proprietor: **DSM Austria GmbH**
**3131 Getzersdorf bei Traismauer (AT)**

(72) Inventors:
• **Gottschalk, Pia**
**3500 Krems (AT)**
• **Binder, Eva-Marina**
**3430 Tulin (AT)**
• **Cole, Stephen**
**3042 Würmla (AT)**

(74) Representative: **Cunow, Gerda**
**Cunow Patentanwalts KG**
**Teschnergasse 33/1/3**
**1180 Wien (AT)**

(56) References cited:
**WO-A1-2005/053655    WO-A1-2017/042340**

WO-A1-2018/059732    CN-A- 105 076 717
CN-A- 105 147 622

• **DANJO K ET AL: "Effect of Particle Shape on the Compaction and Flow Properties of Powders", CHEMICAL AND PHARMACEUTICAL BULLETIN, PHARMACEUTICAL SOCIETY OF JAPAN, JP, vol. 37, no. 11, 1 November 1989 (1989-11-01), pages 3070-3073, XP002108927, ISSN: 0009-2363**

Remarks:
The file contains technical information submitted after the application was filed and not included in this specification

(52) Cooperative Patent Classification (CPC): (Cont.)

C-Sets
**A01N 25/12, A01N 31/08, A01N 65/00,**
**A01N 65/10, A01N 65/22;**
A23V 2002/00, A23V 2200/224, A23V 2250/194,
A23V 2250/21

**Description**

The present invention relates to a particle or to particles containing at least one hydrophobic matrix material and at least one volatile substance, a food and/or feed additive containing said particle, a process for its preparation as well as use of at least one volatile substance as a flowability enhancer for particles.

It has long been known that certain volatile substances such as essential oils and plant extracts can be used to mediate a broad range of beneficial effects to support the health and well-being of humans and animals upon consumption. Natural essential oils are mixtures of volatile aromatic compounds produced by plants. Due to their antibacterial, antifungal and/or antiviral activities, essential oils are widely used in the food and feed industries. Particularly their positive effects on growth performance, gut microbiota and the welfare of monogastric animals render essential oils ideal alternatives to antibiotic growth promoters. However, their volatile character hampers the application of essential oils in food and feed and especially in dry feed mixtures. In order to increase the storage stability of essential oils, to mask their flavor, to protect them from interactions with other compounds, to reduce the risk of oxidation and to enable a controlled release of the essential oils, the technique of microencapsulation can be applied. Microencapsulation summarizes all encapsulation processes from which particles in the $\mu$m scale up to one mm are obtained. Depending on the selected encapsulation process, the active material is either surrounded by a coating (core shell encapsulation) or distributed within a matrix (matrix encapsulation). One method to achieve matrix encapsulation of essential oils is spray cooling, also referred to as spray chilling or prilling. During prilling, the active material is well mixed with a molten carrier or matrix material, such as a hydrogenated vegetable oil or a wax. The mixture is subsequently atomized with a nozzle or finely spread on a rotating disc and brought in contact with cool air which leads to solidification and thus the formation of microparticles. Fats and waxes can take on diverse polymorphic forms with the $\alpha$-form being the least stable and the $\beta$-form being the most stable. Additionally, the intermediate $\beta'$- forms can occur. The velocity of the polymorphic transformation from the $\alpha$- over $\beta'$- to the $\beta$-form can be actively influenced by the presence of additives such as surfactants and/or essential oils. Furthermore, it is well studied that exposing fats or waxes to elevated temperatures can support effects such as polymorphic transformation and fat blooming, which affect the properties of microparticles. In the feed industry, an exposure of particles containing active substances to temperatures above room temperature during transport and storage cannot be excluded. It is thus of outmost importance to develop products that are maintaining their properties without any alteration.

WO 2018/059732 A1 discloses particles comprising a core and at least one non-confluent coating layer, containing at least one volatile substance and at least one hydrophobic substance.

WO 2017/042340 A1 relates to a production process for solid formulations comprising therapeutically active or nutritious plant extracts, preferably acerola plant extract. However, no information is provided on particles comprising one or more volatile substance(s) and on measures that may prevent caking of the particles.

CN 105 076 717 A relates to a feed additive, comprising an acidity regulator, a plant essential oil and an auxiliary material for improving the production performance of animals. However, CN 105 076 717 A does not refer to particles wherein the composition of the individual components of the described feed additive may be considered to yield optimal results while also maintaining desirable flowability characteristics.

CN 105 147 622 A discloses granules prepared from the antibiotic growth promoter olaquindox and auxiliary materials selected from the group of hydrogenated castor oil, hydrogenated soybean oil, stearic acid, glyceryl monostearate, solid fat, animal wax, vegetable wax and solid polyethylene glycol.

WO 2005/053655 A1 relates to a method of forming multiparticulates, which comprise a drug capable of existing in crystalline form, which crystalline form includes a volatile species having a vapor pressure of at least 0.01 atm at an operating temperature of the disclosed method.

Danjo et al. (1989 Chem. Pharm. Bull. 37(11) 3070-3073) describes the effect of the shape of particles on their flow behavior by the examples of potato starch powder, alpha-lactose monohydrate powder, calcium carbonate powder, dibasic calcium phosphate powder, crystalline cellulose powder, sodium glutamate powder and croscarmellose sodium powder. However, no information is provided relating to particles containing a hydrophobic matrix material and a volatile substance.

One problem commonly observed in microparticles containing a fat or wax matrix is aggregation or caking of the particles during storage. Especially particle caking can lead to the formation of large aggregates which cannot be utilized as feed additives any more. To prevent caking it is necessary to add different processing aids or to process the particles further as quickly as possible, e.g. by applying a coating or by adding anticaking agents and/or texturizers and/or flow enhancer, such as e.g. silica. Adding processing aids requires however at least one additional step in the microparticle production process which leads to a dilution of active substance per product and might affect other particle properties. Furthermore, it is normally required that the further processing of the particles is preferably performed within twelve hours.

Therefore, the present invention aims at a powder consisting of particles consisting of at least one hydrophobic matrix material and of at least one volatile substance selected from essential oils and/or plant extracts, which resists caking and which maintains flowability over time.

This objective has been achieved by providing a particle containing at least one hydrophobic matrix material and at least one volatile substance which particle is characterized in that the particle contains 60% to 90% by weight of the at least one matrix material, whereby the at least one matrix material is selected from hydrogenated triglycerides, preferably vegetal triglycerides preferably palm oil, sunflower oil, corn oil, rapeseed oil, peanut oil or soybean oil, that are solid or semi-solid at 20 °C and 1 atmosphere, that the particle contains 10% to 40% by weight of the at least one volatile substance, whereby the at least one volatile substance is selected from essential oils and/or plant extracts, the at least one volatile substance has a vapor pressure at 125 °C in the range from 10 mm Hg to 200 mm Hg, preferably from 30 mm Hg to 70 mm Hg, the at least one volatile substance is homogeneously distributed in the at least one matrix material, and the particle has a sphericity from 0.800 to 0.999 whereby the particles maintain flowability. By providing such a particle and/or powder consisting of such particles, it is surprisingly possible to avoid caking of such particles, to maintain flowability and in particular to maintain a consistent level of flowability without the need for addition of one or several anticaking agent(s). Thus, the at least one volatile substance acts as a flow enhancer. By selecting the at least one matrix material from hydrogenated triglycerides that are solid or semi-solid at 20 °C and 1 atmosphere and by selecting the at least one volatile substance from essential oils and/or plant extracts, particularly good results are obtained in microencapsulation processes. This results in particles that maintain flowability for a long term, such as for example at least 4 months and that maintain a consistent level of flowability for at least 3.5 months after 14 days of maturing of the particles.

Flowability as referred to herein can be determined by determining the angle of repose of a conical pile of particles by the angle of repose-method as described in the following. A funnel with a defined outlet diameter is hung in an exactly defined distance above the center of a round shaped disc with a known radius (r). A sufficient amount of particles is poured through the glass funnel onto the disc for covering the entire disc surface until no more particles can be piled on the disc and particles start to roll over the disc edge, whereby the particles piled on the disc form a conical pile. The height (h) of the cone is measured. Finally, the pitch angle $\alpha$ can be calculated as the angle of repose by applying the following formula:

$$\tan \alpha = \frac{h}{r}$$

The angle of repose takes on higher values with worsening powder or particle flow properties, as the single particles rather tend to stay on top of each other than to fall down. As used herein, flowability is defined as an angle of repose from 20 ° to 55 ° determined as described above. A powder or particles with an angle of repose from 20 ° to 55 ° determined as described above are considered flowable. A powder and/or particles are herein considered to maintain flowability, when the angle of repose of said powder or particles is determined by the angle of repose-method to lie within the range from 20 ° to 55 ° at least three months after the start of the preparation process of said powder or particles. In case the angle of repose of a powder or particles is non-determinable by the angle of repose-method as described herein, e.g. due to caking, such a powder and/or particles are not considered flowable. A powder or particles with an angle of repose from 25 ° to 30 ° can be considered to be excellently flowable whereas a powder or particles with an angle of repose from 50 ° to 55 ° can be considered to be poorly flowable.

Herein, particles are considered to maintain a consistent level of flowability when the range of an angle of repose determined one, two, three, three and a half and/or four months after the production start of particles as described above overlaps with the range of the angle of repose of particles from the same production batch two weeks after the production start; where the range of an angle of repose is defined to be +/- 5 %, preferably to be +/- 3 % of the angle of repose value.

By selecting the at least one matrix material from the group of hydrogenated triglycerides, preferably vegetal triglycerides like palm oil, sunflower oil, corn oil, rapeseed oil, peanut oil or soybean oil it is especially possible to prepare the particles at temperatures below 100 °C and therefore avoiding an excessive loss of the at least one volatile substance. Moreover by choosing the at least one matrix material from the materials listed above, particularly good mixing with the at least one volatile substance and a homogeneous distribution thereof can be achieved. Ultimately, by choosing the at least one matrix material from the materials listed above, solid spherical particles can be obtained.

Excellent homogenisation in the at least one matrix material can be obtained when the at least one volatile substance contained in the particle has a vapor pressure at 125 °C in the range from 10 mm Hg to 200 mm Hg, preferably from 30 mm Hg to 70 mm Hg. By choosing the at least one volatile substance to have a vapor pressure as indicated above, the at least one volatile substance can exert its desired function best. The vapor pressures being calculated using the Antoine equation and constants obtained from Yaws, C.L. & Satyro, M.A., "Chapter 1 - Vapor Pressure - Organic Compounds", in "The Yaws Handbook of Vapor Pressure (Second Edition) Antoine Coefficients", Elsevier B.V. (2015) pp 1-314, ISBN: 978-0-12-802999-2. An alternative source obtaining Antoine constants may be Dykyj, J., Svoboda, J., Wilhoit, R.C., Frenkel, M. & Hall, K.R., "Chapter 2 Organic Compounds", C1 to C57 Part 2, in "Vapor Pressure and Antoine Constants for Oxygen Containing Organic Compounds", Springer Materials (2000) pp 111-205. ISBN: 978-3-540-49810-0. In case the different vapor pressure calculations result in contradictory results it is herein preferred that the vapor pressure of the at least one volatile substance in the core is preferably in the range starting from the vapor pressure of D-limonene (CAS-No: 5989-27-5) and ending at the vapor pressure of eugenol (CAS-No: 97-53-0), more preferred in the range starting from the vapor pressure of linalool (CAS-No: 78-70-6) and ending at the vapor pressure of D-carvone (CAS-No: 2244-16-8).

The Antoine equation describes the relation between the vapor pressure and temperature for pure compounds. Antoine equation:

$$\log_{10} p = A - \frac{B}{C+T}$$

Where:

p - vapor pressure of the component, mmHg
T - temperature, °C
A, B, C - component specific Antoine constants.
e.g.: Calculation of the vapor pressure of D-limonene at 125 °C with A = 7.06744, B = 1691.1486, C = 227.441

$$\log_{10} p = 7.06744 - \frac{1691.1486}{227.441 + 125}$$

$$\log_{10} p = 2.269052185$$

$$p = 10^{2.269052185} = 185.8028$$

By selecting the at least one volatile substance being contained in the particle from essential oils and/or plant extracts both being preferentially prepared from a plant selected from the group of oregano, thyme, wintergreen, caraway, marjoram, mint, peppermint, anise, orange, lemon, fennel, star anise, ginger, clove, cinnamon and garlic; or from an ingredient, component or compound of essential oils or plant extracts, which also may be derived from synthetic or biotechnological production, preferably selected from the group of D-limonene, $\gamma$-terpinene, p-cymene, 2-carene, linalool oxide, isomenthone, camphor, linalool, terpinen-4-ol, 2-isopropyl-1-methoxy-4-methylbenzene, L-menthol, ethylamine, $\alpha$-terpineol, $\beta$-caryophyllene, D-carvone, methyl salicylate, $\alpha$-caryophyllene, lavandulyl acetate, caryophyllene oxide, eugenol, thymol and carvacrol; the particle containing a volatile substance as described can maintain flowability best and can especially be used as flavoring in human or animal nutrition, anti-bacterial, antiinflammatory, anabolic, morphology improving, gut integrity enhancing, digestibility improving, gut microbiota modulating, gut health status supporting agent; as digestibility enhancer to allow improved feed utilization and sparing of nutrients; as prevention and/or curing agent for humans or animals suffering from diseases such as cough, parasite attack, diarrhea, intestinal enteritis and so on; as flavoring agents for chewing gums to enhance the refreshing experience of a chewing gum, as flavoring for toiletries to have a boosting flavoring effect in any kind of toiletries such as shower gel, shampoo, tooth paste, deodorants and so on, as flavoring and substances with antibacterial efficacy in cleaning and washing formulations based on a liquid and/or dry solution and many other applications. Herein, essential oils are defined as substances that are prepared according to at least one procedure described in the European Pharmacopoeia, 8th Edition, supplement 8.0/2098. Herein, plant extracts are defined as substances that are prepared according to at least one procedure described in the European Pharmacopoeia, 8th Edition, supplement 8.5/0765. It is understood that all essential oils and compounds mentioned herein can be either of natural, synthetic or biotechnological origin.

In the following vapor pressures of selected volatile substances at 125 °C are indicated: D-Limonene 185.8028 mm Hg, $\gamma$-Terpinene 156.6294 mm Hg, p-Cymene 170.1698 mm Hg, Camphor 67.8680 mm Hg, Linalool 73.1145 mm Hg, $\alpha$-Terpineol 36.7883 mm Hg, D-Carvone 29.0791 mmHg, Eugenol 11.2903 mmHg, Thymol 19.2101 mm Hg and Carvacrol 16.2002 mmHg. In case different vapor pressure calculations result in contradictory results it is preferred that the vapor pressure of the at least one volatile substance is in the range from the vapor pressure of D-limonene to the vapor pressure of eugenol, preferred in the range from the vapor pressure of linalool to the vapor pressure of D-carvone.

The degree of sphericity of a particle affects several properties, physical as well as biological, of both a single particle as well as of a powder made of said particles. By providing a particle that has a sphericity from 0.850 to 0.980, an optimal surface area-to-volume ratio can be achieved. In addition, it is believed that by minimizing the surface area and by approaching a perfectly round and spherical three dimensional structure, interactions between individual particles can be minimized, thus further supporting the resistance of the particles described herein to caking and thus to maintain flowability, in particular to obtain a consistent level of flowability. Sphericity as used herein can be determined e.g. with an imaging device for particle size distribution analyses using a Camsizer X2 (Retsch GmbH, Haan, Germany) with a X-Jet module for dry dispersion. For the measurement, a dispersion pressure of 55 kPa, a maximum feeding rate of 55% and a nominal area density of 0.7% are selected. As criterion for the end of a measurement, a particle count of 250000 is selected.

The size of a spherical or sphere-like particle can be described by its diameter. The size of the particles forming a powder can affect the applicability of the particles considerably. Especially good flowability results can be obtained by providing a particle with a diameter in the range from 50 $\mu$m to 1000 $\mu$m, preferably from 100 $\mu$m to 400 $\mu$m, more preferably from 150 $\mu$m to 350 $\mu$m and even more preferably from ,175 $\mu$m to 300 $\mu$m. Particles having a diameter as described above are sufficiently small to be mixed efficiently in liquid, pasty or also solid products such as powders or granules. For instance, the particles can be added in incorporated amounts of 0.01 g to 7 kg or to even larger amounts per 1000 kg and/or 1000 L to prevention and/or curing agents for humans or animals, in incorporated amounts of 0.01 g to 10 kg or to even larger amounts per 1000 kg and/or 1000 L to flavoring agents for human or animal nutrition or also added in amounts of 10 g to 10 kg or to even larger amounts per ton to feed/dry milk replacers and/or per 1000 L of water/milk in feed, milk replacers and also to water. At the same time, particles having a diameter as described above are large enough to contain the desired amount of active substance(s). The particle diameter as referred to herein can be determined e.g. by laser diffraction using a Beckman LS 13320 (Beckman-Coulter GmbH, Austria) with a universal liquid module and propan-2-ol (Carl Roth, Germany) as dispersant. The measurement duration is set to 15 seconds. A pump speed of 40% and an obscuration of 15% are selected.

Best results, especially flowability results, can be obtained when 1 kg of particles is provided to have a D50 value from 120 $\mu$m to 280 $\mu$m, preferably from 150 $\mu$m to 250 $\mu$m, more preferably from 200 $\mu$m to 240 $\mu$m. By providing particles having a D50 as described above, admixing of these particles to a liquid, pasty or to solid products such as powders or granules can be performed best.

The D50 value is defined as the particle diameter below which 50% of a plurality of particles has a smaller diameter, and above which 50% of a plurality of particles has a larger diameter. The D50 value can be determined e.g. from data acquired from laser diffraction experiments using a Beckman LS 13320 (Beckman-Coulter GmbH, Austria) equipped with a universal liquid module and propan-2-ol (Carl Roth, Germany) as dispersant. The measurement duration is set to 15 seconds. A pump speed of 40% and an obscuration of 15% are selected.

By providing particles which have a particle-size distribution span from 0.30 to 1.40, more preferably from 0.40 to 1.00, even more preferably from 0.55 to 0.80, excellent uniformity in the distribution of the particles within an admixed material such as a liquid, pasty or solid products such as powders or granules can be achieved. As a consequence, by providing particles with a particle-size distribution span as described above, approximately the same amount of particles can be retrieved from a sample drawn from a product to which the particles were admixed. Also, a particle-size distribution span as described above ensures a uniformity in size among particles as described herein, which uniformity in size contributes to obtain particles that maintain flowability for at least 4 months and that maintain a consistent level of flowability for at least 3.5 months after 14 days of maturing of the particles. The particle-size distribution span as referred to herein represents the width of the particle-size distribution. The smaller the particle-size distribution span, the more similar are the particles to one another in size. The particle-size distribution span (PDS) can be calculated by using the following formula:

$$ PDS = \frac{D90 - D10}{D50} $$

where the D90 value is the particle diameter below which 90% of a plurality of particles have a smaller diameter, the D10 value is the particle diameter below which 10% of a plurality of particles have a smaller diameter, and the D50 value is defined as the particle diameter below which 50% of a plurality of particles have a smaller diameter and above which 50% of a plurality of particles have a larger diameter. The values for D90, D10 and D50 can be determined e.g. from data acquired from laser diffraction experiments using a Beckman LS 13320 (Beckman-Coulter GmbH, Austria) equipped with a universal liquid module and propan-2-ol (Carl Roth, Germany) as dispersant. The measurement duration is set to 15 seconds. A pump speed of 40% and an obscuration of 15% are selected.

Especially good results in terms of flowablility and storability can be obtained by providing a particle that contains 15% to 35% by weight of the at least one volatile substance, preferably contains 20% to 35% by weight of the at least one volatile substance. Hereby, particles can be obtained that are particularly resistant towards caking and contain a high amount of active substance for an application e.g. as feed additive.

The exact quantity and ratio of the components contained in a particle as well as the exact choice of the component(s) making up the active substance determine the properties of said particle, e.g. storability, flowability, efficacy etc. Excellent results are obtainable by providing a particle that contains 70% by weight of hydrogenated sunflower oil and 30% by weight of a mixture of volatile substances consisting of synthetic carvacrol, caraway oil and oregano oil. Surprisingly, excellent flowability can be maintained even after at least 3.5 months of storage after maturing, by providing a particle containing the components at the ratio defined above. Moreover, a powder made of said particles is especially well-suited for an application e.g. as food or feed additive, due to the individual and combined beneficial effects of the volatile substances listed above as well as due to the favorable long-lasting flowability behavior of these particles.

Due to the vast number of disadvantages associated with the use of antibiotic growth promoters in nutrition, alternative products and/or substances are urgently needed. It is worth noting that many volatile substances, selected from essential oils and/or plant extracts, e.g. carvacrol, are perceived by a majority of humans and/or farm animals as distasteful or unpalatable - e.g. due to a pungent or bitter taste and/or odor, despite the long-proven beneficial effects of these substances on health and well-being. Therefore, use of volatile substances as food or feed additives in a pure form is considered not feasible. Also, particles that contain at least one volatile substance non-homogeneously distributed in at least one matrix material can not sufficiently mask the repelling properties of the volatile substances contained in such particles and are thus considered not to be well-suited for use as food or feed additive. Moreover, to allow admixing to e.g. feed and thus usability over a reasonable time after production, a powder made of such particles is required to maintain flowability.

It is therefore a further object of the invention to provide a food and/or feed additive consisting of particles, according to claim 1 or 2, which particles contain 60% to 90% by weight of at least one matrix material, selected from hydrogenated triglycerides that are solid or semi-solid at 20 °C and 1 atmosphere; and which particles contain 10% to 40% by weight of at least one volatile substance, selected from essential oils and/or plant extracts, which are homogeneously distributed in the at least one matrix material; and optionally consisting of at least one further component selected from vitamins, trace elements, proteins and/or microorganisms. By providing a food or feed additive consisting of particles containing 60% to 90% by weight of an at least one hydrophobic matrix material and 10% to 40% by weight of an at least one volatile substance, and optionally at least one further component, it was surprisingly found that flowability of said food or feed additive can be maintained over time. By providing a food and/or feed additive as described above it was surprisingly possible to mask the unpleasant taste and/or odor of the at least one volatile substance contained in the food and/or feed additive. Therefore, a food and/or feed additive as described above is especially well-suited to be admixed to food and/or feed. Furthermore, by selecting the at least one matrix material from hydrogenated triglycerides that are solid or semi-solid at 20 °C and 1 atmosphere and by selecting the at least one volatile substance from essential oils and/or plant extracts, particularly good results are obtained in the microencapsulation process, resulting in particles that maintain flowability especially well and are thus particularly well-suited as food or feed additive for the administration of essential oils as active substances.

Particles consisting of components selected from the group of fats, hydrogenated triglycerides and waxes, and volatile substances such as essential oils, are subjected to polymorphic transformation events and additional external influences. Among other particle properties, the flowability behavior is affected e.g. by such polymorphic transformation events. For an efficient and reproducible industrial application, a preparation process is required that is suitable to prepare particles which are resistant to events that influence their flowability behavior and which particles are capable of maintaining flowability and preferably of maintaining a consistent level of flowability.

Therefore, this invention also aims at a process for preparing a particle or particles consisting of at least one volatile substance, comprising the steps of

(i) forming a melt of an at least one matrix material selected from the group of fats, hydrogenated triglycerides and waxes that are solid or semi-solid at 20 °C and 1 atmosphere,
(ii) forming a liquid preparation of the at least one volatile substance selected from essential oils and/or plant extracts,
(iii) incorporating the liquid preparation of the at least one volatile substance selected from essential oils and/or plant extracts into the melt and thereby forming a melt mixture,
(iv) forming discrete particles by finely dispersing the melt mixture,
(v) cooling the discrete particles, and
(vi) maturing the particles for at least 14 days,

whereby the particles maintain a consistent level of flowability.

The execution of the maturing (or maturation) step of the particles was surprisingly found to be essential to obtain particles as described above which particles maintain flowability for at least 3.5 months of storage after maturing and which particles maintain a consistent level of flowability during at least that period of time. Only after performing the step of maturing, particles can be obtained which particles are capable of maintaining a consistent level of flowability.

It is understood that the step of maturing is thus required to alter the particles' surface structure, resulting in the desired consistent flowability behavior. By providing a process for preparing particles maintaining a consistent level of flowability, said particles are thus especially well-suited to be admixed to a target material, e.g. feed, in a highly reproducible manner. A consistent level of flowability allows comparable and reproducible admixing of particles immediately after completing step (vi) of the process described above, as well as one, two, three, three and a half, four etc. months after start of the process described above. The maturing according to step (vi) is conducted by storing the particles at controlled temperature, pressure and relative humidity, wherein

(i) the temperature ranges from 15 °C to 45 °C, preferably from 20 °C to 40 °C, more preferably from 25 °C to 37 °C, even more preferably from 25 °C to 30 °C,
(ii) the pressure ranges from 0.7 atm to 1.3 atm, preferably from 0.9 atm to 1.1 atm and
(iii) the relative humidity ranges from 30% to 80%, preferably from 40% to 70%, more preferably from 40% to 60%.

Maturing or maturation as referred to herein is defined as subjecting the intermediate particles obtained after step (v) of the process described above, within at most six hours, preferably within at most three hours after step (v) of the process described above, to a temperature in the range from 15 °C to 45 °C, preferably from 20 °C to 40 °C, more preferably from 25 °C to 37 °C, even more preferably from 25 °C to 30 °C; to a pressure in the range from 0.7 atm to 1.3 atm, preferably from 0.9 atm to 1.1 atm; and to a relative humidity in the range from 30% to 80%, preferably from 40% to 70%, more preferably from 40% to 60%; in a sealable container or vessel or repository, preferably in a sealable container made from glue-laminated aluminium foil; for one month, preferably for two weeks. Particles are considered to possess or to maintain a consistent level of flowability when the range of an angle of repose determined one, two, three and/or four months after production start overlaps with the range of the angle of repose of said particles after step (vi) of the process described above, i.e. after maturing; where the range of an angle of repose is defined to be +/- 5 %, preferred to be +/- 3 % of the angle of repose value. For example, after maturing, the angle of repose of particles prepared as described above is determined to be 38.1 °. 3 % of 38.1 ° equals 1.1 °, leading to a range from 37.0 ° to 39.2 °. Four months after the start of the particle preparation process, the angle of repose of the same particles is determined to be 39.1 °. 3 % of 39.1 ° equals 1.2 °, leading to a range from 37.9 ° to 40.3 °. Since the range of the angle of repose after maturing spans from 37.0 ° to 39.2°, and the range of the angle of repose four months after production start spans from 37.9 ° to 40.3 °, the two ranges overlap and these particles are considered to show a consistent level of flowability.

When maturing was performed outside the temperature, pressure and/or relative humidity range, the particles could not reach a consistent level of flowability or the particles clustered together and formed bigger aggregates or clumps. Both is of great disadvantage, as the process parameters of the further particle processing would have to be adjusted according to the different flowability. When the flowability remains stable, the particles can be further processed using the same process parameters, regardless if the particles are further processed 14 days after their production, i.e. immediately after the maturing period, or 4 months after production start. Further processing can be for example, the mixing of the particles with feed ingredients or feed additives as well as the granulation or encapsulation of the particles.

By providing a process for preparing a particle or particles consisting of at least one volatile substance as described above, characterized in that the steps (iv) "forming discrete particles by finely dispersing the melt mixture" to (v) "cooling the discrete particles" are performed using matrix encapsulation techniques, preferably spray cooling techniques, particles can be prepared which particles have an excellent distribution of the at least one volatile substance in the at least one matrix material and thus possess especially favorable flowability characteristics, and are particularly well-suited to be admixed to a material, preferably to food or feed. Applicable spray cooling techniques are described in detail, e.g. in Gouin, S. (2004) "Microencapsulation: industrial appraisal of existing technologies and trends". Trends Food Sci. Technol. 15, 330-347 and in WO 99/61145 "Method and apparatus for forming an encapsulated product matrix". By using such a technique it is possible to prepare particles containing up to 40% by weight of a volatile substance.

Currently mainly solid flow enhancers are used as processing aids in the state of the art. Such solid flow enhancers like silica are added to particles after their production to prevent aggregation and clustering of the particles and to maintain their flowability. The addition of these solid flow enhancers, especially silica, can cause several technical problems during processing as already described above, but it can also be dangerous due to the appearance of dust. The fine dust, especially silica dust, may be inhaled by the operator causing damage of their lung. In addition, the dust, especially silica dust, may also lead to dust explosions.

To overcome said problems of solid flow enhancers like silica, the present invention aims to provide alternatives.

Therefore, the invention is directed to the use of at least one volatile substance as a flowability enhancer for particles, wherein the particles contain

(i) at least one hydrophobic matrix material and
(ii) at least one volatile substance as a flow enhancer and

wherein a single particle contains 60% to 90% by weight of the at least one matrix material,

the at least one matrix material is selected from hydrogenated triglycerides, preferably vegetal triglycerides, preferably palm oil, sunflower oil, corn oil, rapeseed oil, peanut oil or soybean oil and from waxes, preferably candelilla wax or carnauba wax, that are solid or semi-solid at 20 °C and 1 atmosphere,

the particle contains 10% to 40% by weight of the at least one volatile substance, the at least one volatile substance is selected from essential oils and/or plant extracts,

the at least one volatile substance has a vapor pressure at 125 °C in the range from 10 mm Hg to 200 mm Hg, and the at least one volatile substance is homogeneously distributed in the at least one matrix material,

whereby the particles maintain flowability and preferably maintain a consistent level of flowability.

By using a volatile substance as a flow enhancer, as described herein, the use of solid flow enhancers is not necessary any more. Therefore, the above mentioned problems caused by such solid flow enhancers like silica can be avoided.

It must be noted that as used herein, the singular forms "a", "an" and "the" include plural references and vice versa unless the context clearly indicates otherwise. Thus, for example, a reference to "a particle" or "a process" includes one or more of such particles or processes, respectively, and a reference to "the process" includes equivalent steps and processes that could be modified or substituted known to those of ordinary skill in the art. Similarly, for example, a reference to "particles", "processes" or "volatile substances" include "a particle", "a process" or "a volatile substance", respectively.

Unless otherwise indicated, the term "at least" preceding a series of elements is to be understood to refer to every element in the series.

The term "about" or "approximately" as used herein means within 20%, preferably within 10%, and more preferably within 5% of a given value or range. It includes also the concrete number, e.g. "about 20" includes the number 20.

The term "more than" includes the concrete number. For example, "more than 20" means $\geq 20$.

For further clarification of all aspects of the invention, the invention is described in the following by means of figures and examples. Therein:

Figure 1A shows the effect of varying the amount of essential oil (EO) as volatile substance content in particles consisting of a hydrophobic matrix material and at least one volatile substance, when stored at 25 °C.

Figure 1B shows the effect of varying the amount of essential oil (EO) as volatile substance content in particles consisting of a hydrophobic matrix material and at least one volatile substance, when stored at 37 °C.

Figure 2 shows a comparison of particles containing a hydrophobic matrix material and 15.0% by weight of essential oil (EO) as volatile substance and either 0%, 5%, 10% by weight of hydrophobic silica.

EXAMPLES

**Example 1**

Process to prepare particles containing at least one volatile substance in a laboratory test:

(i) Forming a melt of a matrix material:
Hydrogenated sunflower oil (HSO; CAS-No: 69002-71-1; ADM Sio; VGB5ST; melting point: 33 °C - 70 °C) was molten in a stainless steel vessel at a melting temperature of 85 °C. 700 g of the HSO were poured into a 2 L glass bottle. The glass bottle containing the HSO was stirred on a magnetic stirrer and the temperature was kept at 85 °C.

(ii) Forming a liquid preparation of volatile substances:
44% by weight synthetic carvacrol (CAS-No: 499-75-2), 47% by weight caraway oil (CAS-No: 8000-42-8) and 9% by weight oregano oil (CAS-No: 862374-92-3) were mixed in a glass bottle at approximately 25 °C to form 300 g of a liquid volatile substance mixture.

(iii) Incorporating the liquid preparation of volatile substances into the melt and thereby forming a melt mixture:
300 g of the volatile substance mixture of step (ii) were added to the melt in the 2 L glass bottle of step (i), forming a melt mixture of the HSO and the volatile substance mixture. The addition of the volatile substances led to a reduction in the temperature of the melt mixture to approximately 60 °C. The final melt contained 70% by weight hydrogenated sunflower oil (CAS-No: 69002-71-1) and 30% by weight volatile substances.

(iv) Forming discrete particles by finely dispersing the melt mixture:
The melt mixture was re-heated to 80 °C and pumped through a hose to a spray connection of a spinning disc (stream of melt mixture: 5.7 L/h). The spinning disc was a horizontally oriented disc with fine grooves on the surface. The melt mixture flowing over the surface of the rotating spinning disc formed fine droplets when leaving the disc's edges. The rotation of the spinning disc (3275 rpm) forced the melt mixture to leave the disc in form of fine droplets.

The spinning disc was assembled within a prilling tower, which was a cuboid chamber with the following dimensions: L x W x H = 90 x 70 x 200 cm, in which the spinning disc was installed.

(v) Cooling the fine droplets - forming discrete particles:

Cooling was achieved by maintaining the temperature in a prilling tower around the spinning disk at a maximum of 30 °C, a temperature at which the fine droplets harden automatically. When the particles reached the prilling tower bottom the droplets had hardened and a powder consisting of cooled, discrete particles had formed.

(vi) Maturing the particles:

150 g of the powder obtained after cooling was filled into sachets made from glue-laminated aluminium compound foil (dimensions of the sachets: W x H = 15.8 x 23.0 cm). Without applying vacuum, the sachets were heat-sealed. The sealed, powder-containing sachets were transferred into an incubator (BD 240 incubator, Binder Inc.) for maturation at 25 °C, 1 atm, 40% - 60% relative humidity, for two weeks.

Alternatively to the mixture of volatile substances described in Example 1 the following mixtures of volatile substances can be used:

(a): 30% by weight orange essential oil; 70% anise essential oil;
(b): 13% by weight oregano oil; 58% by weight thyme oil; 29% by weight caraway oil;
(c): 51% by weight peppermint oil; 10% by weight marjoram oil; 16% by weight clove oil; 23% by weight star anise oil;
(d): 67% by weight mint oil; 2% wintergreen oil; 22% by weight L-carvone; 9% by weight methyl salicylate;
(e): 100% by weight oregano oil;
(f): 100% by weight ginger oil;
(g): 45% by weight cinnamon bark oil; 9% by weight trans-cinnamaldehyde; 18% by weight clove oil; 6% by weight eugenol; 2% by weight β-caryophyllene; 20% by weight by orange oil;
(h): 17% by weight carvacrol; 78% by weight thymol; 5% by weight D-carvone;
(i): 17% by weight of garlic oil; 80% by weight of fennel oil; 3% by weight trans-anethole;
(j): 41% by weight peppermint oil; 34% by weight clove oil; 25% by weight thymol; or
(k): 100% by weight carvacrol.

## Example 2

Determination of flowability by the angle of repose-method:

A glass funnel with an outlet diameter of 8 mm was hung 15 cm above the center of a round shaped disc with a known radius (r). Sufficient particles were poured through the glass funnel onto the disc for covering the entire disc surface until no more particles could be piled on the disc and particles started to roll over the disc edge, whereby the particles piled on the disc formed a conical pile. For obtaining the conical pile about 100 g of particles were necessary. The height (h) of the conical pile was measured. Finally, the pitch angle $\alpha$ could be calculated as the angle of repose (AoR) by applying the following formula:

$$\tan \alpha = \frac{h}{r}$$

In case a powder sample was determined to have an angle of repose from 20 ° to 55 °, the powder was considered flowable and thus to possess flowability. A powder and/or particles were considered to maintain flowability, when the angle of repose of said powder or particles was determined by the angle of repose-method to lie within the range from 20 ° to 55 ° at least three months after the start of the preparation process of said powder or particles. In case the angle of repose of a powder or particles was non-determinable by the angle of repose-method as described herein, e.g. due to caking, such a powder and/or particles were not considered flowable.

A consistent level of flowability as described herein is defined as the range of an angle of repose determined one, two, three and/or four months after production start that overlaps with the range of the angle of repose after maturation as described herein; where the range of an angle of repose is defined to be +/- 5 %, preferred to be +/- 3% of the angle of repose value.

## Example 3

Preparation of particles consisting of different amounts of matrix material and volatile substances, and determination of flowabilities thereof:

Particles were basically prepared as described in Example 1 using different amounts of HSO as matrix material and of the volatile substance mixture as described in Example 1. A first batch of particles was prepared, where the particles consisted of 92.5% by weight HSO and of 7.5% by weight of a volatile substance mixture as described in Example 1. A second batch of particles was prepared, where the particles consisted of 85% by weight HSO and of 15% of a volatile substance mixture as described in Example 1. A third batch of particles was prepared, where the particles consisted of 70% by weight HSO and of 30% of a volatile substance mixture as described in Example 1. The compositions of the three batches are summarized in Table 1.

**Table 1:** Composition of particles consisting of different amounts of matrix material, i.e. hydrogenated sunflower oil (HSO) and of volatile substance mixture (VSM). The amounts are shown in percent by weight of the complete particle or the complete melt mixture.

| Batch # | HSO %wt | VSM %wt |
|---|---|---|
| 1 | 92.5 | 7.5 |
| 2 | 85.0 | 15.0 |
| 3 | 70.0 | 30.0 |

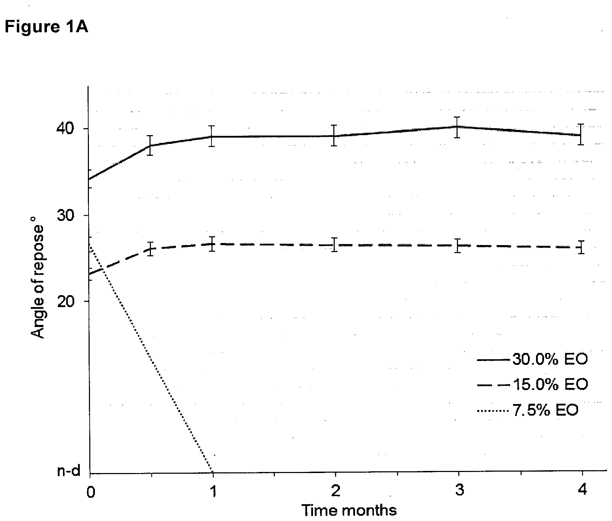

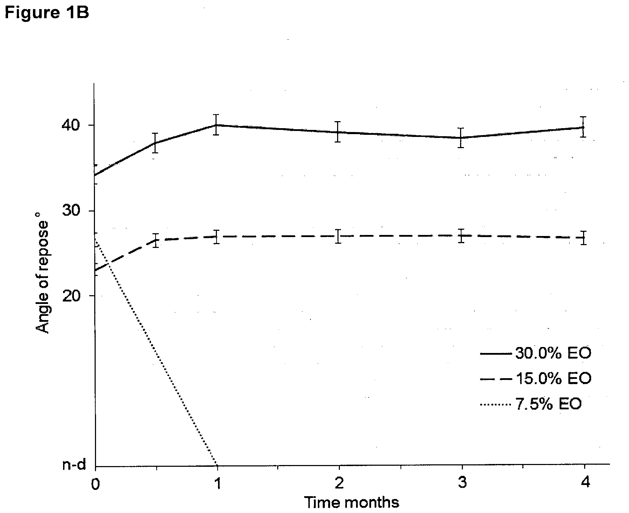

After maturation, powders from all three batches were stored for 3.5 months, i.e. until four months after the start of the preparation process. Storage was performed at either 25 °C or 37 °C. By applying the angle of repose-method as described in detail in Example 2, the flowability of samples from all three batches was determined repeatedly within a time period from the start of the preparation process until four months thereafter. Flowabilities were determined before maturation, after maturation, one, two, three and four months after the start of the preparation process. The resulting curves are shown in Figures 1A and 1B. Figure 1A shows the effect of different amounts of essential oil (EO) as volatile substance in particles on flowability when stored at 25 °C. The particle preparation process was started at time 0. Maturation of the particles was performed for two weeks as described in Example 1. Then, particles were stored for 3.5 months at 25 °C. +/- 3% ranges of determined angles of repose are shown as "error" bars. As indicated, the angle of repose-curve of particles containing 30.0% by weight EO is shown as solid line, the curve of particles containing 15.0% by weight EO is shown as dashed line, the curve of particles containing 7.5% by weight EO is shown as dotted line. After one month, the formation of aggregates of particles containing 7.5% by weight EO prevented the determination of an angle of repose, whereby this non-determinable (n-d) angle of repose is represented here as a drop on the y-axis to "n-d". Figure 1B shows the effect of different amounts of essential oil (EO) as volatile substance in particles on flowability when stored at 37 °C. The particle preparation process was started at time 0. Maturation of the particles was performed for two weeks as described in Example 1. Then, particles were stored for 3.5 months at 37 °C. +/- 3% ranges of determined angles of repose are shown as "error" bars. As indicated, the angle of repose-curve of particles containing 30.0% by weight EO is shown as solid line, the curve of particles containing 15.0% by weight EO is shown as dashed line, the curve of particles containing 7.5% by weight EO is shown as dotted line. After one month, the formation of aggregates of particles containing 7.5% by weight EO prevented the determination of an angle of repose, whereby this non-determinable (n-d) angle of repose is represented here as a drop on the y-axis to "n-d".

The determined angles of repose (AoRs) and the associated ranges considering +/- 3% are summarized in Table 2.

**Table 2:**

|  | Before maturation | After 14 days maturation | 1 month | 2 months | 3 months | 4 months |
|---|---|---|---|---|---|---|
| **25 °C: 7.5%wt VSM** | | | | | | |
| -3% ° | 25.8 | | | | | |
| AoR ° | 26.6 | | n-d | n-d | n-d | n-d |
| +3% ° | 27.4 | | | | | |
| **25 °C: 15.0%wt VSM** | | | | | | |
| -3% ° | 22.5 | 25.3 | 25.8 | 25.7 | 25.5 | 25.2 |
| AoR ° | 23.2 | 26.1 | 26.6 | 26.5 | 26.3 | 26.0 |
| +3% ° | 23.9 | 26.9 | 27.4 | 27.2 | 27.1 | 26.8 |

(continued)

| 25 °C: 30.0%wt VSM | | | | | | |
|---|---|---|---|---|---|---|
| -3% ° | 33.2 | 37.0 | 37.9 | 37.9 | 38.8 | 37.9 |
| AoR ° | 34.2 | 38.1 | 39.1 | 39.1 | 40.0 | 39.1 |
| +3% ° | 35.2 | 39.2 | 40.3 | 40.3 | 41.2 | 40.3 |
| 37 °C: 7.5%wt VSM | | | | | | |
| -3% ° | 25.8 | | | | | |
| AoR ° | 26.6 | | n-d | n-d | n-d | n-d |
| +3% ° | 27.4 | | | | | |
| 37 °C: 15.0%wt VSM | | | | | | |
| -3% ° | 22.4 | 25.7 | 26.1 | 26.1 | 26.1 | 25.8 |
| AoR ° | 23.1 | 26.5 | 26.9 | 26.9 | 26.9 | 26.6 |
| +3% ° | 23.8 | 27.3 | 27.7 | 27.7 | 27.7 | 27.4 |
| 37 °C: 30.0%wt VSM | | | | | | |
| -3% ° | 33.2 | 36.8 | 38.8 | 37.9 | 37.2 | 38.4 |
| AoR ° | 34.2 | 37.9 | 40.0 | 39.1 | 38.4 | 39.6 |
| +3% ° | 35.2 | 39.0 | 41.2 | 40.3 | 39.6 | 40.8 |

In case of caking, an angle of repose (AoR) was non-determinable (n-d).

As evident from the Figures 1A and 1B as well as from the data presented in Table 2, particles containing 7.5% by weight of the volatile substance mixture did not maintain flowability, whereas particles containing 15% or 30% by weight of the volatile substance mixture did maintain flowability. Moreover, before maturation, particles did not maintain a consistent level of flowability as defined herein, whereas particles containing 15% or 30% by weight of the volatile substance mixture that were subjected to maturation did maintain a consistent level of flowability. The results obtained from storage at 25 °C or at 37 °C were comparable, indicating an independence of the observed phenomena from temperatures at least within that range.

The conditions during maturation were important to obtain particles that have a consistent level of flowability during subsequent storage at last for 3.5 months. When maturing was performed at temperature lower 15 °C and above 45 °C, the particles could not reach the consistent level of flowability or the particles clustered together and formed bigger aggregates or clumps. The same is true when maturing is performed at pressure lower 0.7 atm and above 1.3 atm, as well as at relative humidity lower than 30% and higher than 80%.

### Example 4

Determination of the effect of added silica on the flowability of particles containing at least one volatile substance: To compare the particles containing 60% to 90% by weight of hydrogenated sunflower oil (HSO) as matrix material and 10% to 40% by weight of a mixture of volatile substaces (VSM), as described herein, to particles containing a silica, a mixture of volatile substances and a matrix material, three batches of particles were prepared according to the compositions described in Table 3.

To incorporate the silica, the particle preparation process as outlined in Example 1 was adapted according to the desired compositions as described in Table 3. To obtain particles containing 5.0% by weight of the silica, 50 g of hydrophobic silica (Sipernat® D 17; CAS-No: 68611-44-9) was added as texturizer or flow enhancing or anticaking agent to 800 g of molten HSO under stirring on a magnetic stirrer at 85 °C, after step (i) "Forming a melt of a matrix material". When the silica had dispersed completely, 150 g of volatile substance mixture was added as described in Example 1. To obtain particles containing 10.0% by weight of the silica, 100 g of the hydrophobic silica was added to 750 g of molten HSO, accordingly.

**Table 3:**

| Batch # | HSO %wt | VSM %wt | Silica %wt |
|---------|---------|---------|------------|
| 1 | 85.0 | 15.0 | 0.0 |
| 2 | 80.0 | 15.0 | 5.0 |
| 3 | 75.0 | 15.0 | 10.0 |

After maturation, powders from all three batches were stored for 3.5 months, i.e. until four months after the start of the preparation process. Storage was performed at 25 °C.

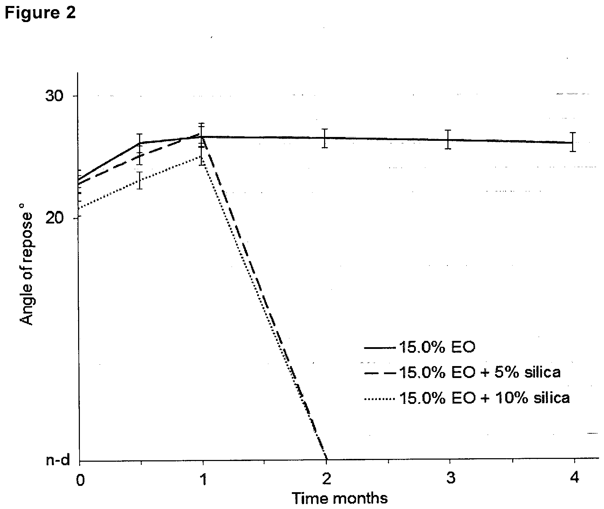

By applying the angle of repose-method as described in detail in Example 2, the flowability of samples from all three batches was determined repeatedly within a time period from the start of the preparation process until four months thereafter. Flowabilities were determined before maturation, after maturation, one, two, three and/or four months after the start of the preparation process. The resulting curves are shown in Figure 2. It shows a comparison of particles containing 15.0% by weight essential oil (EO) and containing either 0%, 5%, 10% by weight of hydrophobic silica. The particle preparation process was started at time 0. Maturation of the particles was performed within the first two weeks. Then, particles were stored for 3.5 months at 25 °C. +/- 3% ranges of determined angles of repose are shown as "error" bars. As indicated, the angle of repose-curve of particles containing 15.0% by weight EO but no silica is shown as solid line, the curve of particles containing 15.0% by weight EO plus 5% by weight silica is shown as dashed line, the curve of particles containing 15.0% by weight EO plus 10% silica is shown as dotted line. After two months, the particles containing either 5% or 10% by weight of silica formed aggregates, preventing a determination of an angle of repose, whereby this non-determinable (n-d) angle of repose is represented here as a drop on the y-axis to "n-d".

Particles containing 15% by weight of the volatile substance mixture but no silica remained flowable throughout the studied period and maintained flowability as well as a consistent level of flowability after maturation. In contrast, particles containing either 5% or 10% by weight of silica in addition to 15% by weight of the volatile substance mixture were astonishingly found to form aggregates and thus did not remain flowable.

## Example 5

Determination of particle properties:
To further describe particles prepared as described in Example 1, the values for sphericity, diameter, D10, D50, D90 and particle-size distribution span (PDS) were determined.

The sphericity of the prepared particles was determined with an imaging device for particle size distribution analyses using a Camsizer X2 (Retsch GmbH, Germany) with a X-Jet module for dry dispersion. For the measurement, a dispersion pressure of 55 kPa, a maximum feeding rate of 55% and a nominal area density of 0.7% were selected. As criterion for the end of a measurement, a particle count of 250000 was selected.

The diameter and the values for D10, D50 and D90 were determined by laser diffraction using a Beckman LS 13320 (Beckman-Coulter GmbH, Austria) with a universal liquid module and propan-2-ol (Carl Roth, Germany) as dispersant. The measurement duration was set to 15 seconds. A pump speed of 40% and an obscuration of 15% were selected. To calculate the particle-size distribution span (PDS), the following formula was used:

$$PDS = \frac{D90 - D10}{D50}$$

where the D90 value is the particle diameter below which 90% of a plurality of particles have a smaller diameter, the D10 value is the particle diameter below which 10% of a plurality of particles have a smaller diameter, and the D50 value is defined as the particle diameter below which 50% of a plurality of particles have a smaller diameter and above which 50% of a plurality of particles have a larger diameter.

In Table 4, exemplary data from three independent production batches (A, B, C) is shown.

**Table 4**

| Batch | Sphericity | D10 μm | D50 μm | D90 μm | PDS |
|-------|------------|--------|--------|--------|-----|
| A | 0.972 | 159 | 236 | 310 | 0.64 |

(continued)

| Batch | Sphericity | D10 μm | D50 μm | D90 μm | PDS |
|---|---|---|---|---|---|
| B | 0.935 | 155 | 232 | 310 | 0.67 |
| C | 0.906 | 159 | 237 | 347 | 0.79 |

The particle-size distribution span (PDS) was calculated as PDS = (D90-D10)/D50.

**Claims**

1. A particle or particles containing

   (i) at least one hydrophobic matrix material and
   (ii) at least one volatile substance

   **characterized in that**

   a single particle contains 60% to 90% by weight of the at least one matrix material, whereby
   the at least one matrix material is selected from hydrogenated triglycerides, preferably vegetal triglycerides preferably palm oil, sunflower oil, corn oil, rapeseed oil, peanut oil or soybean oil, that are solid or semi-solid at 20 °C and 1 atmosphere,
   the single particle contains 10% to 40% by weight of the at least one volatile substance, whereby
   the at least one volatile substance is selected from essential oils and/or plant extracts,
   the at least one volatile substance has a vapor pressure at 125 °C in the range from 10 mm Hg to 200 mm Hg, preferably from 30 mm Hg to 70 mm Hg,
   the at least one volatile substance is homogeneously distributed in the at least one matrix material, and
   the particle has a sphericity from 0.800 to 0.999,
   whereby the particles maintains flowability.

2. The particle according to claim 1, **characterized in that** the essential oils and/or plant extracts both being obtained from a plant selected from the group of oregano, thyme, caraway, marjoram, mint, peppermint, anise, orange, lemon, fennel, star anise, ginger, clove, cinnamon, wintergreen and garlic; or from an ingredient or compound of essential oils or plant extracts preferably selected from the group of trans-anethole, D-limonene, γ-terpinene, p-cymene, 2-carene, linalool oxide, isomenthone, camphor, linalool, terpinen-4-ol, 2-isopropyl-1-methoxy-4-methylbenzene, L-menthol, ethylamine, α-terpineol, β-caryophyllene, D-carvone, methyl salicylate, α-caryophyllene, lavandulyl acetate, caryophyllene oxide, eugenol, thymol and carvacrol.

3. The particle according to any one of the claims 1 or 2, **characterized in that** the particle has a sphericity from 0.850 to 0.980.

4. The particle according to any one of the claims 1 to 3, **characterized in that** the particle has a diameter in the range from 50 μm to 1000 μm, preferably from 100 μm to 400 μm, more preferably from 150 μm to 350 μm and even more preferably from 175 μm to 300 μm.

5. The particle according to any one of the claims 1 to 4, **characterized in that** 1 kg of the particles has a D50 value from 120 μm to 280 μm, preferably from 150 μm to 250 μm, more preferably from 200 μm to 240 μm.

6. The particle according to any one of the claims 1 to 5, **characterized in that** 1 kg of the particles has a particle-size distribution span from 0.30 to 1.40, more preferably from 0.40 to 1.00, even more preferably from 0.55 to 0.80.

7. The particle according to any one of the claims 1 to 6, **characterized in that** the particle contains 12% to 35% by weight of the at least one volatile substance, preferably contains 15% to 30% by weight of the at least one volatile substance.

8. The particle according to any one of the claims 1 to 7, **characterized in that** the particle contains 70% by weight of hydrogenated sunflower oil and 30% by weight of a mixture of volatile substances consisting of synthetic carvacrol, caraway oil and oregano oil.

9. A food and/or feed additive **characterized in that** it contains

   (i) at least one particle according to one of the claims 1 to 2, and
   (ii) optionally at least one further component selected from vitamins, trace elements, proteins, enzymes and microorganisms.

10. A process for preparing particles according to one of the claims 1 to 2, comprising the steps of

    (i) forming a melt of an at least one matrix material selected from the group of fats, hydrogenated triglycerides and waxes that are solid or semi-solid at 20 °C and 1 atmosphere,
    (ii) forming a liquid preparation of the at least one volatile substance selected from essential oils and/or plant extracts,
    (iii) incorporating the liquid preparation of the at least one volatile substance selected from essential oils and/or plant extracts into the melt and thereby forming a melt mixture,
    (iv) forming discrete particles by finely dispersing the melt mixture,
    (v) cooling the discrete particles, and
    (vi) maturing the particles for at least 14 days,

    whereby the particles maintain a consistent level of flowability.

11. The process according to claim 10, **characterized in that** the steps (iv) to (v) are performed using matrix encapsulation techniques, preferably spray cooling techniques.

12. The process according to claims 10 or 11, **characterized in that** the maturing according to step (vi) is conducted by storing the particles at controlled temperature, pressure and relative humidity, wherein

    (i) the temperature ranges from 15 °C to 45 °C, preferably from 20 °C to 40 °C, more preferably from 25 °C to 37 °C, even more preferably from 25 °C to 30 °C,
    (ii) the pressure ranges from 0.7 atm to 1.3 atm, preferably from 0.9 atm to 1.1 atm and
    (iii) the relative humidity ranges from 30% to 80%, preferably from 40% to 70%, more preferably from 40% to 60%.

13. Use of at least one volatile substance as a flowability enhancer for particles, wherein

    the particles contain

       (i) at least one hydrophobic matrix material and
       (ii) at least one volatile substance as a flow enhancer

    and
    wherein a single particle contains 60% to 90% by weight of the at least one matrix material,
    the at least one matrix material is selected from hydrogenated triglycerides, preferably vegetal triglycerides preferably palm oil, sunflower oil, corn oil, rapeseed oil, peanut oil or soybean oil, that are solid or semi-solid at 20 °C and 1 atmosphere,
    the particle contains 10% to 40% by weight of the at least one volatile substance,
    the at least one volatile substance is selected from essential oils and/or plant extracts,
    the at least one volatile substance has a vapor pressure at 125 °C in the range from 10 mm Hg to 200 mm Hg, and
    the at least one volatile substance is homogeneously distributed in the at least one matrix material, whereby the particles maintain flowability.


**Patentansprüche**

1. Partikel oder Teichen enthaltend

(i) wenigstens ein hydrophobes Matrixmaterial und

(ii) wenigstens eine flüchtige Substanz

**dadurch gekennzeichnet, dass**

ein einzelnes Partikel 60 Gew.-% bis 90 Gew.-% des wenigstens einen Matrixmaterials enthält, wobei das wenigstens eine Matrixmaterial aus hydrierten Triglyceriden, vorzugsweise pflanzlichen Triglyceriden, vorzugsweise Palmöl, Sonnenblumenöl, Maiskeimöl, Rapsöl, Erdnussöl oder Sojaöl gewählt ist, welche bei 20 °C und 1 Atmosphäre fest oder halbfest sind,

das einzelne Partikel 10 Gew.-% bis 40 Gew.-% der wenigstens einen flüchtigen Substanz enthält, wobei die wenigstens eine flüchtige Substanz aus ätherischen Ölen und/oder Pflanzenextrakten gewählt ist,

die wenigstens eine flüchtige Substanz einen Dampfdruck bei 125 °C in dem Bereich von 10 mm Hg bis 200 mm Hg, vorzugsweise von 30 mm Hg bis 70 mm Hg aufweist,

die wenigstens eine flüchtige Substanz homogen in dem wenigstens einen Matrixmaterial verteilt ist, und

das Partikel eine Sphärizität bzw. Kugeligkeit von 0,800 bis 0,999 aufweist,

wobei die Partikel fließfähig bleiben.

2. Partikel nach Anspruch 1, **dadurch gekennzeichnet, dass** sowohl die ätherischen Öle und/oder Pflanzenextrakte aus einer Pflanze gewählt aus der Gruppe von Oregano, Thymian, Kümmel, Majoran, Minze, Pfefferminze, Anis, Orange, Zitrone, Fenchel, Sternanis, Ingwer, Nelke, Zimt, Moosbeere und Knoblauch; oder aus einer Komponente oder einem Bestandteil von ätherischen Ölen oder Pflanzenextrakten, vorzugsweise gewählt aus der Gruppe der trans-Anethole, D-Limonen, y-Terpinen, p-Cymol, 2-Caren, Linalooloxid, Isomenthon, Kampfer, Linalool, Terpinen-4-ol, 2-Isopropyl-1-methoxy-4-methylbenzol, L-Menthol, Ethylamin, $\alpha$-Terpineol, $\beta$-Caryophyllen, D-Carvon, Methylsalicylat, $\alpha$-Caryophyllen, Lavandulylacetat, Caryophyllenoxid, Eugenol, Thymol und Carvacrol erhalten werden.

3. Partikel nach einem der Ansprüche 1 oder 2, **dadurch gekennzeichnet, dass** das Partikel eine Sphärizität von 0,850 bis 0,980 aufweist.

4. Partikel nach einem der Ansprüche 1 bis 3, **dadurch gekennzeichnet, dass** das Partikel einen Durchmesser in dem Bereich von 50 $\mu$m bis 1000 $\mu$m, vorzugsweise von 100 $\mu$m bis 400 $\mu$m, noch bevorzugter von 150 $\mu$m bis 350 $\mu$m und am bevorzugtesten von 175 $\mu$m bis 300 $\mu$m aufweist.

5. Partikel nach einem der Ansprüche 1 bis 4, **dadurch gekennzeichnet, dass** 1 kg der Partikel einen D50-Wert von 120 $\mu$m bis 280 $\mu$m, vorzugsweise von 150 $\mu$m bis 250 $\mu$m, noch bevorzugter von 200 $\mu$m bis 240 $\mu$m aufweist.

6. Partikel nach einem der Ansprüche 1 bis 5, **dadurch gekennzeichnet, dass** 1 kg der Partikel eine Teilchengrößenverteilung von 0,30 bis 1,40, bevorzugter von 0,40 bis 1,00, noch bevorzugter von 0,55 bis 0,80 aufweist.

7. Partikel nach einem der Ansprüche 1 bis 6, **dadurch gekennzeichnet, dass** das Partikel 12 Gew.-% bis 35 Gew.-% von wenigstens einer flüchtigen Substanz, vorzugsweise 15 Gew.-% bis 30 Gew.-% der wenigstens einen flüchtigen Substanz enthält.

8. Partikel nach einem der Ansprüche 1 bis 7, **dadurch gekennzeichnet, dass** das Partikel 70 Gew.-% hydriertes Sonnenblumenöl und 30 Gew.-% einer Mischung aus flüchtigen Substanzen bestehend aus synthetischem Carvacrol, Kümmelöl und Oreganoöl enthält.

9. Nahrungs- und/oder Futtermittelzusatzstoff, **dadurch gekennzeichnet, dass** er

(i) wenigstens ein Partikel bzw. Teilchen gemäß einem der Ansprüche 1 oder 2, und

(ii) gegebenenfalls wenigstens eine weitere Komponente gewählt aus Vitaminen, Spurenelementen, Proteinen, Enzymen und Mikroorganismen enthält.

10. Verfahren zur Herstellung von Partikeln bzw. Teilchen nach einem der Ansprüche 1 oder 2, umfassend die Schritte

(i) Ausbilden einer Schmelze aus wenigstens einem Matrixmaterial gewählt aus der Gruppe der Fette, hydrierten Triglyceride und Wachse, welche bei 20 °C und 1 Atmosphäre fest oder halbfest sind,

(ii) Ausbilden einer flüssigen Zubereitung aus der wenigstens einer flüchtigen Substanz gewählt aus ätherischen Ölen und/oder Pflanzenextrakten,

(iii) Einbringen der flüssigen Zubereitung aus der wenigstens einen flüchtigen Substanz gewählt aus ätherischen Ölen und/oder Pflanzenextrakten in die Schmelze und dabei Ausbilden einer Mischung,

(iv) Ausbilden von separaten Partikeln durch feines Dispergieren der Schmelzemischung,
(v) Kühlen der separaten Partikel, und
(vi) Reifen lassen der Partikel für wenigstens 14 Tage,

wobei die Partikel ein gleichbleibendes Niveau an Fließfähigkeit beibehalten.

**11.** Verfahren nach Anspruch 10, **dadurch gekennzeichnet, dass** die Schritte (iv) bis (v) unter Verwendung von Matrix-Verkapselungstechniken, vorzugsweise Sprüh-Kühlungs-Techniken durchgeführt werden.

**12.** Verfahren nach Ansprüchen 10 oder 11, **dadurch gekennzeichnet, dass** die Reifung gemäß Schritt (vi) durch Lagern der Partikel bei kontrollierter(m) Temperatur, Druck und relativer Feuchte durchgeführt wird, wobei

(i) die Temperatur im Bereich von 15 °C bis 45 °C, vorzugsweise von 20 °C bis 40 °C, noch bevorzugter von 25 °C bis 37 °C, noch weiter bevorzugt von 25 °C bis 30 °C liegt,
(ii) der Druck im Bereich von 0,7 atm bis 1,3 atm, vorzugsweise von 0,9 bis 1,1 atm liegt,
(iii) die relative Feuchte im Bereich von 30 % bis 80 %, vorzugsweise von 40 % bis 70 %, noch bevorzugter von 40 % bis 60 % liegt.

**13.** Verwendung von wenigstens einer flüchtigen Substanz als Fließfähigkeitsverstärker für Partikel bzw. Teichen, worin

die Partikel enthalten

(i) wenigstens ein hydrophobes Matrixmaterial und
(ii) wenigstens eine flüchtige Substanz als Fließfähigkeitsverstärker und

worin ein einzelnes Partikel wenigstens 60 Gew.-% bis 90 Gew.-% von dem wenigstens einen Matrixmaterial enthält,
das wenigstens eine Matrixmaterial gewählt ist aus hydrierten Triglyceriden, vorzugsweise pflanzlichen Triglyceriden, vorzugsweise Palmöl, Sonnenblumenöl, Maiskeimöl, Rapsöl, Erdnussöl oder Sojaöl, welche bei 20 °C und 1 Atmosphäre fest oder halbfest sind, gewählt ist, das Partikel 10 Gew.-% bis 40 Gew.-% der wenigstens einen flüchtigen Substanz enthält,
die wenigstens eine flüchtige Substanz gewählt ist aus ätherischen Ölen und/oder Pflanzenextrakten,
die wenigstens eine flüchtige Substanz einen Dampfdruck bei 125 °C in dem Bereich von 10 mm Hg bis 200 mm Hg aufweist, und
die wenigstens eine flüchtige Substanz homogen in dem wenigstens einen Matrixmaterial verteilt ist, wobei die Partikel ihre Fließfähigkeit beibehalten.

## Revendications

**1.** Particule ou particules contenant

(i) au moins un matériau en matrice hydrophobe et
(ii) au moins une substance volatile
**caractérisées en ce que**
une particule unique contient 60 % à 90 % en poids de l'au moins un matériau en matrice, moyennant quoi
l'au moins un matériau en matrice est choisi parmi les triglycérides hydrogénés, de préférence les triglycérides d'origine végétale, de préférence l'huile de palme, l'huile de tournesol, l'huile de maïs, l'huile de colza, l'huile d'arachide ou l'huile de soja, qui sont solides ou semi-solides à 20°C et sous 1 atmosphère,
la particule unique contient 10 % à 40 % en poids de l'au moins une substance volatile, moyennant quoi
l'au moins une substance volatile est choisie parmi les huiles essentielles et/ou les extraits de plantes,
l'au moins une substance volatile a une pression de vapeur à 125°C dans la plage de 10 mm Hg à 200 mm Hg, de préférence de 30 mm Hg à 70 mm Hg,
l'au moins une substance volatile est distribuée de façon homogène dans l'au moins un matériau en matrice, et
la particule a une sphéricité de 0,800 à 0,999,
moyennant quoi les particules conservent une fluidité.

**2.** Particule selon la revendication 1, **caractérisée en ce que** les huiles essentielles et/ou extraits de plantes sont tous deux obtenus à partir d'une plante choisie dans le groupe constitué par l'origan, le thym, le carvi, la marjolaine, la menthe, la menthe poivrée, l'anis, l'orange, le citron, le fenouil, l'anis étoilé, le gingembre, le clou de girofle, la cannelle, la gaulthérie et l'ail ; ou à partir d'un ingrédient ou composé d'huiles essentielles ou d'extraits de plantes de préférence choisi dans le groupe constitué par le trans-anéthol, le D-limonène, le $\gamma$-terpinène, le p-cymène, le 2-carène, l'oxyde de linalool, l'isomenthone, le camphre, le linalool, le terpinén-4-ol, le 2-isopropyl-1-méthoxy-4-méthylbenzène, le L-menthol, l'éthylamine, l'$\alpha$-terpinéol, le $\beta$-caryophyllène, la D-carvone, le salicylate de méthyle, l'$\alpha$-caryophyllène, l'acétate de lavandulyle, l'oxyde de caryophyllène, l'eugénol, le thymol et le carvacrol.

3. Particule selon l'une quelconque des revendications 1 et 2, **caractérisée en ce que** la particule a une sphéricité de 0,850 à 0,980.

4. Particule selon l'une quelconque des revendications 1 à 3, **caractérisée en ce que** la particule a un diamètre dans la plage de 50 $\mu$m à 1000 $\mu$m, de préférence de 100 $\mu$m à 400 $\mu$m, plus préférablement de 150 $\mu$m à 350 $\mu$m et plus préférablement encore de 175 $\mu$m à 300 $\mu$m.

5. Particule selon l'une quelconque des revendications 1 à 4, **caractérisée en ce que** 1 kg des particules a une valeur D50 de 120 $\mu$m à 280 $\mu$m, de préférence de 150 $\mu$m à 250 $\mu$m, plus préférablement de 200 $\mu$m à 240 $\mu$m.

6. Particule selon l'une quelconque des revendications 1 à 5, **caractérisée en ce que** 1 kg des particules a une plage de distribution des tailles de particules de 0,30 à 1,40, plus préférablement de 0,40 à 1,00, encore plus préférablement de 0,55 à 0,80.

7. Particule selon l'une quelconque des revendications 1 à 6, **caractérisée en ce que** la particule contient 12 % à 35 % en poids de l'au moins une substance volatile, de préférence contient 15 % à 30 % en poids de l'au moins une substance volatile.

8. Particule selon l'une quelconque des revendications 1 à 7, **caractérisée en ce que** la particule contient 70 % en poids d'huile de tournesol hydrogénée et 30 % en poids d'un mélange de substances volatiles consistant en carvacrol synthétique, essence de carvi et essence d'origan.

9. Additif alimentaire à usage humain et/ou animal, **caractérisé en ce qu'**il contient

(i) au moins une particule selon l'une des revendications 1 et 2, et
(ii) optionnellement au moins un autre composant choisi parmi les vitamines, les oligo-éléments, les protéines, les enzymes et les microorganismes.

10. Procédé pour préparer des particules selon l'une des revendications 1 et 2, comprenant les étapes de

(i) formation d'une masse fondue d'au moins un matériau en matrice choisi dans le groupe constitué par les graisses, les triglycérides hydrogénés et les cires qui sont solides ou semi-solides à 20°C et sous 1 atmosphère,
(ii) formation d'une préparation liquide de l'au moins une substance volatile choisie parmi les huiles essentielles et/ou les extraits de plantes,
(iii) incorporation de la préparation liquide de l'au moins une substance volatile choisie parmi les huiles essentielles et/ou les extraits de plantes dans la fondue et ainsi formation d'un mélange fondu,
(iv) formation de particules discrètes par dispersion fine du mélange fondu,
(v) refroidissement des particules discrètes, et
(vi) maturation des particules pendant au moins 14 jours,

moyennant quoi les particules conservent un niveau homogène de fluidité.

11. Procédé selon la revendication 10, **caractérisé en ce que** les étapes (iv) et (v) sont effectuées par utilisation de techniques d'encapsulation dans une matrice, de préférence par des techniques de refroidissement par pulvérisation.

12. Procédé selon la revendication 10 ou 11, **caractérisé en ce que** la maturation selon l'étape (vi) est effectuée par stockage des particules dans des conditions régulées de température, de pression et d'humidité relative, dans lequel

(i) la température est dans la plage de 15°C à 45°C, de préférence de 20°C à 40°C, plus préférablement de 25°C à 37°C, encore plus préférablement de 25°C à 30°C,

(ii) la pression est dans la plage de 0,7 atm à 1,3 atm, de préférence de 0,9 atm à 1,1 atm et
(iii) l'humidité relative est dans la plage de 30 % à 80 %, de préférence de 40 % à 70 %, plus préférablement de 40 % à 60 %.

**13.** Utilisation d'au moins une substance volatile en tant qu'amplificateur de fluidité pour particules,

dans laquelle les particules contiennent

(i) au moins un matériau en matrice hydrophobe et
(ii) au moins une substance volatile servant d'amplificateur de fluidité,

et dans laquelle une particule unique contient 60 % à 90 % en poids de l'au moins un matériau en matrice, l'au moins un matériau en matrice est choisi parmi les triglycérides hydrogénés, de préférence les triglycérides d'origine végétale, de préférence l'huile de palme, l'huile de tournesol, l'huile de maïs, l'huile de colza, l'huile d'arachide ou l'huile de soja, qui sont solides ou semi-solides à 20°C et sous 1 atmosphère, la particule contient 10 % à 40 % en poids de l'au moins une substance volatile, l'au moins une substance volatile est choisie parmi les huiles essentielles et/ou les extraits de plantes, l'au moins une substance volatile a une pression de vapeur à 125°C dans la plage de 10 mm Hg à 200 mm Hg, et l'au moins une substance volatile est distribuée de façon homogène dans l'au moins un matériau en matrice, moyennant quoi les particules conservent une fluidité.

**Figure 1A**

**Figure 1B**

**Figure 2**

## REFERENCES CITED IN THE DESCRIPTION

### Patent documents cited in the description

- WO 2018059732 A1
- WO 2017042340 A1
- CN 105076717 A
- CN 105147622 A
- WO 2005053655 A1
- WO 9961145 A

### Non-patent literature cited in the description

- **DANJO et al.** *Chem. Pharm. Bull.,* 1989, vol. 37 (11), 3070-3073
- Chapter 1 - Vapor Pressure - Organic Compounds. **YAWS, C.L. ; SATYRO, M.A.** The Yaws Handbook of Vapor Pressure. Elsevier B.V, 2015, 1-314
- Chapter 2 Organic Compounds. **DYKYJ, J. ; SVOBODA, J. ; WILHOIT, R.C. ; FRENKEL, M ; HALL, K.R.** Vapor Pressure and Antoine Constants for Oxygen Containing Organic Compounds. Springer Materials, 2000, 111-205
- *CHEMICAL ABSTRACTS,* 5989-27-5
- *CHEMICAL ABSTRACTS,* 97-53-0
- *CHEMICAL ABSTRACTS,* 78-70-6
- *CHEMICAL ABSTRACTS,* 2244-16-8
- European Pharmacopoeia
- **GOUIN, S.** Microencapsulation: industrial appraisal of existing technologies and trends. *Trends Food Sci. Technol.,* 2004, vol. 15, 330-347
- *CHEMICAL ABSTRACTS,* 69002-71-1
- *CHEMICAL ABSTRACTS,* 499-75-2
- *CHEMICAL ABSTRACTS,* 8000-42-8
- *CHEMICAL ABSTRACTS,* 862374-92-3
- *CHEMICAL ABSTRACTS,* 68611-44-9